# EUROPEAN PATENT APPLICATION

(11) **EP 2 607 420 A1**
(43) Date of publication of application: **26.06.2013**
(21) Application number: 11818285.6
(22) Date of filing: 14.03.2011
(51) Int. Cl.: C08K 9/02, C08K 3/08, C08J 5/18, B29D 7/01

(54) **COMPOSITION FOR A COMPOSITE SHEET COMPRISING CORE-SHELL TYPE FILLER PARTICLES, A COMPOSITE SHEET COMPRISING THE SAME AND A PRODUCTION METHOD FOR THE COMPOSITE SHEET**

(30) Priority: 20.08.2010 KR 20100080733
(71) Applicant: Donghyun Electronics Co., Ltd., Pyeongtaek-si, Gyeonggi-do 451-831 (KR)
(72) Inventor: CHOI, Hyun-Seok, Bucheon-si Gyeonggi-do 422-802 (KR); MOON, Moo-Kyoung, Hwaseong-si Gyeonggi-do 445-987 (KR); PARK, Chang-Young, Siheung-si Gyeonggi-do 429-901 (KR); LEE, Kyung-Sub, Suwon-si Gyeonggi-do 440-710 (KR)
(74) Representative: Schwarz & Partner
(86) International application number: PCT/KR2011/001764
(87) International publication number: WO 2012/023685

(57) **Abstract**

This disclosure relates to a composition for a composite sheet including core-shell type filler particles comprising magnetic particles covered with thermally conductive ceramic compound, and a curable organic binder, a composite sheet comprising the core-shell type filler particles, and a method for preparing the composite sheet. According to the composition for a composite sheet, excellent thermal conductivity and electromagnetic wave absorption performance may be achieved without degradation of dielectric strength, and low hardness of the final composite sheet may be achieved with the same filler contents.

## Description

### TECHNICAL FIELD

The present invention relates to a composition for a composite sheet, a composite sheet, and a method for preparing the composite sheet, and more particularly to a composition for a composite sheet that uses a core-shell type filler, thereby maintaining a magnetic property and thermal conductivity and simultaneously affording electrical insulation to achieve excellent thermal conductivity and electromagnetic wave absorption performance without degradation of dielectric strength, a composite sheet, and a method for preparing a composite sheet.

The present invention has been derived from studies conducted as a part of the Industrial Original Technology Development Project of the Ministry of Knowledge Economy [Project Management No: 10031944, Project Name: Development of heat spread type electromagnetic wave shielding material for protection of LCD device].

### BACKGROUND OF THE ART

Recently, with a tendency of electronic equipment and electronic components to become light, thin, short, and small, the degree of integration of electrical devices is becoming high, and the heating value of electrical devices that are operated with electrical energy is largely increasing. Thereby, there is increasing demand for improvement in the heat dissipation property for effectively dispersing heat generated in electrical equipment and dissipating it. Further, as the degree of integration of electrical devices becomes high, the amount of electromagnetic wave generation is also increasing, and electromagnetic waves may be leaked through a joint, a connecting part, and the like of the electrical equipment to cause operation errors of other electrical devices or electrical components or cause adverse actions such as weakening of a body's immune function, and the like.

Thus, there have been various studies on a way of simultaneously achieving the heat dissipation property for effectively dispersing heat generated in electrical devices and dissipating it, and the property of effectively shielding and absorbing electromagnetic waves.

To improve the heat dissipation property, it has been suggested that various electrical devices be equipped with a heat dissipation plate for conducting heat and discharging it outside, or be equipped with a silicone rubber sheet, and the like with excellent thermal conductivity. However, the heat dissipation plate or silicone rubber sheet may not be strongly adhered to electrical devices, it may not sufficiently manifest the heat dissipation property, and it has little capacity of shielding and absorbing electromagnetic waves.

Therefore, a method of simultaneously applying a material having a heat dissipation property and a material for shielding and absorbing electromagnetic waves has been suggested. Particularly, a laminated product of a sheet having thermal conductivity and a sheet having electromagnetic wave shielding/absorbing performance has been used a lot. However, these products have a thick thickness due to the property of a multi-layered material, may easily generate a short circuit, and have difficulty in exhibiting thermal conductivity and electromagnetic wave absorbing property recently required in electronic equipment. In addition, to improve thermal conductivity or the electromagnetic wave absorbing property, a method of increasing the filling amount of a filler added in the multi-layered material has been suggested, but it is difficult to fill beyond a specific amount due to compatibility, and the like, and if the filling amount is increased, hardness of the multi-layered material increases to deteriorate thermal conductivity of the product.

### DETAILED DESCRIPTION OF THE INVENTION

### TECHNICAL OBJECTIVES

It is an object of the present invention to provide a composition for a composite sheet that uses a core-shell type filler, thereby maintaining a magnetic property and thermal conductivity, and simultaneously affording electrical insulation to achieve excellent thermal conductivity and electromagnetic wave absorption performance without degradation of dielectric strength.

It is another object of the present invention to provide a composite sheet obtained using the composition for a composite sheet.

It is another object of the present invention to provide a method for preparing the composite sheet.

### TECHNICAL SOLUTIONS

The present invention provides a composition for a composite sheet including core-shell type filler particles including magnetic particles covered with thermally conductive ceramic compound, and a curable organic binder.

The present invention also provides a composite sheet including an organic binder cured into a sheet shape and core-shell type filler particles dispersed in the organic binder sheet, wherein the core-shell type filler particles include magnetic particles covered with thermally conductive ceramic compound.

The present invention also provides a method for preparing a composite sheet including forming core-shell type filler particles including magnetic particles covered with thermally conductive ceramic compound, mixing the core-shell type filler particles and an organic binder, and forming the mixture into a sheet shape.

Hereinafter, a composition for a composite sheet, a composite sheet, and a method for preparing a composite sheet according to specific embodiments will be explained in detail.

According to one embodiment of the invention, there is provided a composition for a composite sheet including core-shell type filler particles including magnetic particles covered with thermally conductive ceramic compound, and a curable organic binder.

As used herein, the term "filler" refers to a material filled in order to afford specific properties such as thermal conductivity or electromagnetic absorption performance and the like to a composite sheet, and the term "core-shell type" refers to a shape wherein a material forming a shell surrounds a material constituting a core.

The present invention is based on the discovery that if core-shell type filler particles including magnetic particles covered with thermally conductive ceramic compoundis applied, an electrical insulation property of the filler may be secured, and thus a composite sheet having high thermal conductivity and electromagnetic absorption performance may be provided without degradation of dielectric strength.

The unique action or effect of the composition for a composite sheet is considered to result from the unique property of the core-shell type filler particles. The core-shell type filler particles may achieve its property from each of the material forming the core and the material forming the shell, and unlike the case wherein two or more kinds of materials are simply mixed or exist in the form of an alloy, a composite effect of the two or more materials may be achieved. Thereby, if the core-shell type filler particles including magnetic particles covered with thermally conductive ceramic compoundis applied, high thermal conductivity and electromagnetic absorption performance of the filler may be satisfied without degradation of dielectric strength, hardness of the final composite sheet may be lowered, and thermal resistance may be decreased when applied to electronic components, thus maximizing thermal conductivity.

Further, if the core-shell type filler particles are applied, a large increase in the amount of the filler in the composite sheet may not significantly increase hardness of the composite sheet, and excellent thermal conductivity, electromagnetic absorption performance, and dielectric strength may be achieved with a single-layered composite sheet having a relatively thin thickness.

The core-shell type filler particles may include magnetic particles covered with thermally conductive ceramic compound. In addition, the core-shell type filler particles may have a shape wherein a core of the magnetic particles is surrounded by a shell of the thermally conductive ceramic compound, and the thermally conductive compound may be bonded to the magnetic particle surface through physical or chemical bonding, and the like.

The magnetic particles may include soft magnetic metal alloy particles or ferrite magnetic particles. The soft magnetic metal alloy particles may include a metal alloy that may be rapidly magnetized when a magnetic field is applied from the outside, and it may absorb and remove electromagnetic wave noise of a specific frequency on the composite sheet. Specific examples of the magnetic particles may include an iron-silicon-aluminum alloy, an iron-silicon alloy, an iron-chromium-silicon alloy, an iron-chromium alloy, a nickel-iron alloy, carbonyl iron or an alloy thereof, and the like. The ferrite magnetic particles are a ceramic material, and may include a spinel structured material that may be easily magnetized by an external magnetic field, and specific examples thereof may include nickel-iron ferrite, manganese-zinc ferrite, a mixture thereof, or an alloy thereof, and the like.

The shape of the magnetic particles is not specifically limited, and for example, it may be spherical, circular, sheet-shaped, polyhedral, rotating-body-shaped, and the like. The size of the magnetic particles is not specifically limited, but it may be preferable to use magnetic particles with an average particle size (D50) of 1 to 100 µm for easy preparation of a composite sheet or for uniform dispersion of the core-shell type filler particles with high contents.

Thus, as the magnetic particles, an iron-silicon-aluminum alloy, an iron-silicon alloy, an iron-chromium-silicon alloy, an iron-chromium alloy, a nickel-iron alloy, carbonyl iron, nickel-iron ferrite, manganese-zinc ferrite, or a mixture thereof may be used.

The thermally conductive ceramic compound may be used in the composite sheet to rapidly deliver heat generated in electrical devices and the like to a heat sink. Specific examples of the thermally conductive ceramic compound may include alumina (Al₂O₃), boron nitride (BN), aluminum nitride (AlN), silicon carbide (SiC), magnesium oxide (MgO), zinc oxide (ZnO), aluminum hydroxide (Al(OH)₃), and a mixture thereof. The thermally conductive ceramic compound may be formed on the surface of the magnetic particles to a thickness of 0.1 to 10 µm by a preparation method described below.

The curable organic binder may function as a substrate of the composite sheet, and it may be preferable to use a material with an excellent heat dissipation property and impact absorption property. Specific examples of the materials that can be used in the organic binder may include a thermally curable silicone rubber compound, a one-component thermally curable silicone binder, a two-component thermally curable silicone binder, an acryl-based resin, an epoxy resin, a urethane resin, or a mixture thereof, and these materials do not need to have a separate adhesion layer and the like due to their excellent adhesion property, thus simplifying the operation process and reducing the unit cost of the final product.

The composition for a composite sheet may include 1 to 99 wt% of the core-shell filler particles including a magnetic particle covered with thermally conductive ceramic compound, and 1 to 99 wt% of the curable organic binder. Since the core-shell type filler particles are applied, compatibility with the organic binder may be improved, and volume% of the ceramic filler required to achieve the same thermal conductivity may be lowered, thus largely increasing filling capacity of the filler. Therefore, the composition for a composite sheet may include 50 to 99 wt% of the core-shell type filler particles; and 1 to 50 wt% of the curable organic binder, more preferably 70 to 95 wt% of the core-shell type filler particles; and 5 to 30 wt% of the curable organic binder.

Meanwhile, the composition for a composite sheet may further include magnetic particles, thermally conductive ceramic compound particles, or a mixture thereof. The magnetic particles or thermally conductive ceramic compound particles are distinguished from the thermally conductive ceramic compound and magnetic particles included in the core-shell type filler particles, and may be added as additional filler to improve thermal conductivity or electromagnetic wave absorption performance of the composite sheet. The magnetic particles or thermally conductive ceramic compound particles added as additional filler may further improve the thermal conductivity and electromagnetic wave absorption property.

Thus, the composition for a composite sheet may include 1 to 97 wt% of the core-shell type filler particles, 1 to 70 wt% of the organic binder, and 1 to 90 wt of the magnetic particles or thermally conductive ceramic compound particles. As explained, if the core-shell type filler particles are applied, the filling capacity of the filler may be largely increased, and thus the composition for a composite sheet may include 45 to 97 wt% of the core-shell type filler particles, 1 to 50 wt% of the curable organic binder, and 1 to 50 wt% of the magnetic particles or thermally conductive ceramic compound particles. More preferably, the composition for a composite sheet may include 70 to 95 wt% of the core-shell type filler particles, 1 to 25 wt% of the curable organic binder, and 1 to 25 wt% of the magnetic particles or thermally conductive ceramic compound particles.

The composition for a composite sheet may further include additives such as a heat stabilizer, a UV stabilizer, a cross-linking agent, or a pigment, and the like. The amount of the additive may be appropriately controlled considering properties of the final product.

Meanwhile, according to another embodiment of the invention, there is provided a composite sheet including an organic binder cured into a sheet shape, and core-shell type filler particles dispersed in the organic binder sheet, wherein the core-shell type filler particles include magnetic particles covered with thermally conductive ceramic compound.

As explained above, the hardness of the composite sheet including the core-shell type filler particles dispersed in the organic binder sheet may not be significantly increased even if the amount of the filler is largely increased, and excellent thermal conductivity, electromagnetic wave absorption performance, and dielectric strength may be achieved with a single-layered structure having a relatively thin thickness.

Thus, the composite sheet may have a thickness of 0.1 to 10.0 mm. If the thickness of the composite sheet is too thin, appropriate thermal conductivity and electromagnetic wave absorption performance may not be achieved, and if the thickness is too thick, heat resistance may be increased to decrease unique performance of the composite sheet, and the weight of the sheet may be increased, which is not preferable in terms of desired light weight of the product.

The composite sheet may have hardness of Asker C 10 to 40, preferably Asker C 15 to 30, within the above thickness range. In addition, the composite sheet may have thermal conductivity of 1.5 to 6.0 W/Mk, preferably 2.0 to 6.0 W/mK, and more preferably 4.0 to 6.0 W/Mk within the above thickness range. Further, the composite sheet may have volume resistivity of 5.0*10¹¹ to 5.0*10¹³ Ω·cm within the above thickness range, and it may have dielectric strength of 0.2 to 5.0 kV/mm, preferably 2.0 to 4.0 kV/mm.

The composite sheet may be a single-layer sheet having a thickness of 0.1 to 10.0 mm. Moreover, the composite sheet may have relatively low hardness, for example, hardness of Asker C 10 to 40, preferably Asker C 15 to 30, even with increasing filler content within the above thickness range, and it may have relatively high thermal conductivity, volume resistivity, and dielectric strength. As described in the experimental examples below, it is confirmed that the composite sheet may exhibit excellent thermal conductivity, electromagnetic wave absorption performance, and dielectric strength while having low hardness.

In general, if the hardness of a heat dissipating sheet is high, air may exist in the interface between a heat sink and a heat dissipating component, and thus, contact heat resistivity may be increased to degrade the heat dissipation property. But since the composite sheet has low hardness while including a high content of the filler, an excellent heat dissipation property may be achieved.

Furthermore, the composite sheet may include a D3-D10 low molecular weight siloxane compound in the content of 200 ppm or less. The low molecular weight siloxane compound is a ring siloxane compound wherein "Me₂Si-O-" units form a ring. It has high volatility, and a trimer having 3 "Me₂Si-O-" units is represented as D3, a tetramer is represented as D4, and a decamer is represented as D10. Since the composite sheet includes the lower molecular weight siloxane compound, particularly the D3-D10 low molecular weight siloxane compound in the content of 200 ppm, a change of the volatilized low molecular weight siloxane compound into an insulator by a spark at contact point may be minimized, and degradation of electrical properties of the electronic goods or devices may be prevented. The content of the D3-D10 low molecular weight siloxane compound may be measured by gas chromatography mass spectroscopy (GC-MS).

Meanwhile, the composite sheet may further include magnetic particles, thermally conductive ceramic compounds, or a mixture thereof, dispersed in the organic binder sheet. As explained, the additionally included magnetic particles, thermally conductive ceramic compound particles, or a mixture thereof is distinguished from the thermally conductive ceramic compound and magnetic particles included in the core-shell type filler particles, and may be added as additional filler to improve thermal conductivity or electromagnetic absorption performance of the composite sheet. The magnetic particles, thermally conductive ceramic compounds, or a mixture thereof may be dispersed in the organic binder sheet.

Therefore, the composite sheet may include 1 to 97 wt% of the core-shell type filler particles dispersed in the organic binder sheet, 1 to 70 wt% of the organic binder cured in a sheet shape, and 1 to 90 wt% of the magnetic particles, thermally conductive ceramic compound particles, or a mixture thereof. As explained, if the core-shell type filler particles are applied, the filling capacity of the filler may be largely increased, and thus the composite sheet may include 45 to 97 wt% of the core-shell type filler particles, 1 to 50 wt% of the organic binder, and 1 to 50 wt% of the magnetic particles, thermally conductive particles, or a mixture thereof. More preferably, the composite sheet may include 70 to 95 wt% of the core-shell type filler particles, 1 to 25 wt% of the organic binder, and 1 to 25 wt% of the magnetic particles, thermally conductive ceramic compound particles, or a mixture thereof.

The constitutional elements that can be included in the composite sheet have been explained with regard to the composition for a composite sheet, and the descriptions of the details are omitted.

Meanwhile, according to another embodiment of the invention, there is provided a method for preparing a composite sheet including forming core-shell type filler particles including magnetic particles covered with thermally conductive ceramic compound, mixing the core-shell type filler particles and an organic binder, and forming the mixture into a sheet shape.

As explained, according to the method for preparing a composite sheet including forming core-shell type filler particles including magnetic particles covered with thermally conductive ceramic compound, a composite sheet having low hardness with high thermal conductivity and electromagnetic wave absorption performance may be obtained without degradation of dielectric strength.

Specifically, the step of forming the core-shell type filler particles may include mixing the thermally conductive ceramic compounds and the magnetic particles and applying shearing stress and impact force to the mixture. As such, if shearing stress and impact force are applied to the mixture of the thermally conductive ceramic compounds and magnetic particles, core-shell type filler particles may be prepared within a short time, the process may be easily controlled because related process parameters are just rotation speed of an impeller, process temperature, or process time, and the like, and an eco-friendly process may be constituted that an organic solvent is not used and deleterious materials are not generated during the process.

The method of applying shearing stress and impact force to the mixture of the thermally conductive ceramic compounds and magnetic particles, the time, and the magnitude of the applied shearing stress and impact force are not specifically limited, and for example, to uniformly form or coat the thermally conductive ceramic compound on the magnetic particles, shearing stress and impact force may be applied at a shearing speed of 3000 rpm to 10,000 rpm for 5 minutes to 1 hour. Further, the apparatus for applying shearing stress and impact force is not specifically limited, and for example, a high speed mixer, a Henschel mixer, or a super mixer, and the like may be used.

The mixture may have a size ratio of the magnetic particles to the thermally conductive ceramic compound particles of 5:1 to 250:1. If the size ratio of the magnetic particles to the thermally conductive ceramic compound particles is less than 5:1, a residual amount of the thermally conductive ceramic compounds that are not bonded or coated on the magnetic particles may be increased to lower the filling capacity of the filler of the composite sheet. If the size of the magnetic particles is too large compared to the size of the thermally conductive ceramic compound particles, frequency of collision between magnetic particles may be increased during formation of the core-shell type filler particles, and thus the thermally conductive ceramic compound may not be easily coated on the surface of the magnetic particles.

Meanwhile, the step of mixing the core-shell type filler particles and the organic binder may further include adding magnetic particles or thermally conductive ceramic compound particles. As explained, the additionally added magnetic particles or thermally conductive ceramic compound particles are distinguished from the thermally conductive ceramic compound and magnetic particles included in the core-shell type filler particles, and it may be added as additional filler to improve thermal conductivity or electromagnetic wave absorption performance of the composite sheet.

The step of mixing the core-shell type filler particles and organic binder may further include adding additives such as a heat stabilizer, a UV stabilizer, a cross-inking agent, or a pigment, and the like. The amount of the additives may be appropriately controlled considering the properties of the final product.

In the step of forming the mixture of the core-shell type filler particles and organic binder into a sheet shape, various molding methods may be used without specific limitation, but it may be preferable to use a hot press method, a tape casting method, a vacuum extrusion method, a vacuum molding casting method, or a spray coating method. Furthermore, the step of forming the mixture into a sheet shape may include curing the sheet obtained from the mixture at 50 to 250 °C for 10 to 2 hours.

Meanwhile, the method for preparing the composite sheet may further include post curing the sheet obtained from the mixture at 100 °C or more for 3 hours or more to lower the content of D3-D10 low molecular weight siloxane compounds included in the composite sheet. If the sheet obtained from the mixture is post cured in a vacuum oven at a high temperature for a long time, the content of D3-D10 low molecular weight siloxane compounds may be largely lowered.

The materials used in the method for preparing the composite sheet have been explained with regard to the composition for a composite sheet, and descriptions of the details are omitted.

### ADVANTAGEOUS EFFECT OF THE INVENTION

According to the present invention, a composition for a composite sheet that may afford an electrical insulation property of a filler, thereby exhibiting excellent thermal conductivity and electromagnetic wave absorption performance without degradation of dielectric strength, a composite sheet including the same, and a method for preparing a composite sheet are provided.

### BRIEF DESCRIPTION OF THE DRAWINGS

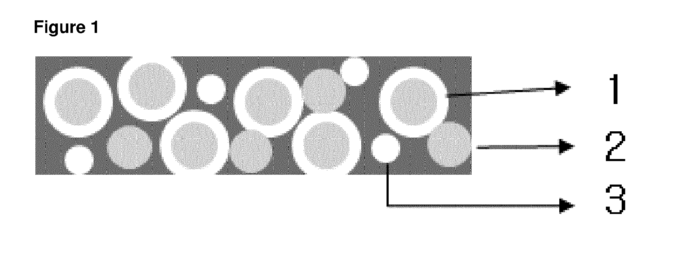

Fig. 1 schematically shows a composite sheet according to one embodiment.

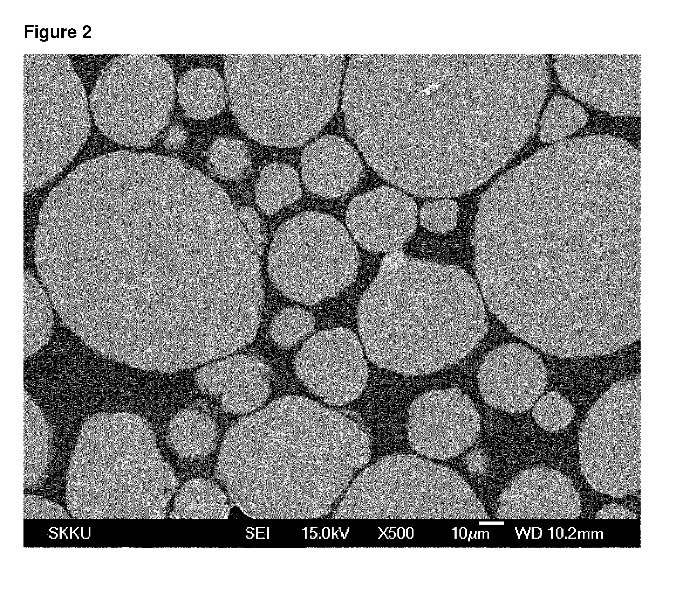

Fig. 2 shows a SEM photo of a composite sheet according to one embodiment.

### DETAILS FOR PRACTICING THE INVENTION

The present invention will be explained in detail with reference to the following examples. However, these examples are only to illustrate the invention, and the scope of the invention is not limited thereto.

### <Preparation Example: Preparation of Core-Shell Type Filler Particles>

Magnetic particles of Fe-Cr powder and a thermally conductive ceramic material of alumina powder were introduced into a chamber, and then shearing force and impact force were applied at 8000 rpm at 250 °C for 15 minutes to obtain Fe-Cr particle powder coated with alumina on the surface. Herein, the size ratio of the magnetic particles of Fe-Cr powder and the thermally conductive ceramic compound particles of alumina was 160:1.

### <Example and Comparative Example: Preparation of Composite Sheet>

### Examples 1 to 7

The core-shell type filler particles obtained in Preparation Example 1, a magnetic powder, a ceramic powder, and an organic binder were mixed with the compositional ratio of the following Table 1 at 10 °C for 120 minutes by planetary mixing method. The mixture was then prepared into a sheet with a thickness of 2.0 mm by tape casting method, and the prepared sheet was cured at 150 °C for 30 minutes.

**[Table 1] Composition of composite sheet**

| | Core-shell type filler particle (wt%) | Magnetic powder (wt%) | Thermally conductive ceramic powder (wt%) | Organic binder (wt%) |
|---|---|---|---|---|
| Example 1 | alumina/Fe-Cr (5) | Fe-Cr (80) | alumina (5) | silicone (10) |
| Example 2 | alumina/Fe-Cr (45) | Fe-Cr (40) | alumina (5) | silicone (10) |
| Example 3 | alumina/Fe-Cr (85) | - | alumina (5) | silicone (10) |
| Example 4 | alumina/Fe-Cr (85) | - | alumina (5) | urethane (10) |
| Example 5 | alumina/Fe-Cr (85) | - | alumina (5) | acryl (10) |
| Example 6 | alumina/Fe-Cr (85) | - | - | silicone (15) |
| Example 7 | alumina/Fe-Cr (80) | Fe-Cr (10) | - | silicone (10) |
| Comparative Example 1 | - | Ni-Zn ferrite (75) | alumina (10) | silicone (15) |
| Comparative Example 2 | - | Fe-Al-Si (88) | alumina (2) | silicone (10) |

| | | | | |
|---|---|---|---|---|
| 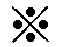 As the silicone organic binder, SL-5100 of Korea KCC Corporation was used; as the urethane organic binder, KC-300 of Korea Kukdo Chemical Co., Ltd. was used; and as the acryl organic binder, A-5098 of Japan NOK Corporation was used. | | | | |

### <Comparative Example: Preparation of Composite Sheet>

### Comparative Example 1

75 wt% of Ni-Zn ferrite, 10 wt% of alumina, and 15 wt% of silicone were mixed at 10 °C for 120 minutes by planetary mixing method. A sheet with a thickness of 2.0 mm was obtained from the mixture by tape casting method.

### Comparative Example 2

88 wt% of soft magnetic metal alloy Fe-Al-Si, 2 wt% of alumina, and 10 wt% of silicon were mixed at 10 °C for 120 minutes by planetary mixing method. A sheet with a thickness of 2.0 mm was obtained from the mixture by tape casting method.

### <Experimental Example>

Thermal conductivity (W/mK), power loss (%), volume resistivity (Ω · cm), hardness (Asker C), and dielectric strength (kV/mm) of the composite sheets prepared in the examples and comparative examples were measured.
(1) Thermal conductivity was measured using a TCi device of C-Therm Technologies Ltd. by a modified hot-wire method of ASTM E55.
(2) Power loss was measured using an E8357A network analyzer of Agilent Company.
(3) Volume resistivity was measured using a high resistivity measuring device (Agilent Company 4339B).
(4) Measurement of hardness
   A 1 Kg load was added to a specimen of 5 cm x 5 cm obtained from the composite sheets of the examples and comparative examples, and the hardness was measured using an Asker C type hardness tester.
(5) Dielectric strength
   The dielectric strength of the composite sheet was measured using a 9027A withstand voltage tester of Zentech Inc.

The measurement results are shown in the following Table 2.

**[Table 2] Measurement results of experimental examples**

| | Thermal conductivity (W/m K) | Power loss (%) | Volume resistivity (Ω · cm) | Hardness (Asker C) | Dielectric strength (kV/mm) |
|---|---|---|---|---|---|
| Example 1 | 2.3 | 30 | 10¹² | 25 | 0.3 |
| Example 2 | 2.4 | 32 | 10¹² | 20 | 1.5 |
| Example 3 | 2.5 | 35 | 10¹³ | 18 | 3.0 |
| Example 4 | 1.7 | 30 | 10¹³ | 25 | 2.3 |
| Example 5 | 1.7 | 30 | 10¹² | 30 | 2.5 |
| Example 6 | 5.0 | 30 | 10¹² | 30 | 3.0 |
| Example 7 | 4.5 | 30 | 10¹² | 30 | 2.8 |
| Comparative Example 1 | 1.7 | 23 | 10¹¹ | 30 | 1.5 |
| Comparative Example 2 | 2.3 | 30 | 10⁷ | 35 | 0.2 |

As shown in the Table 2, it was confirmed that the composite sheets of the examples may exhibit excellent thermal conductivity and electromagnetic wave absorption performance while having Asker C hardness of 30 or less. It was also confirmed that the composite sheets of the examples have volume resistivity of 10¹² Ω · cm or more and dielectric strength of 0.3 kV/mm or more, preferably 1.5 kV/mm or more, thus exhibiting excellent properties as heat dissipating material.

Particularly, it was confirmed that even if the composite sheets of Examples 6 and 7 include 80 to 85 wt% of core-shell type filler particles, the hardness does not significantly increase (hardness of about 30 Asker C), and simultaneously, it may exhibit high thermal conductivity of 4.5 W/mK, high volume resistivity of about 10¹² Ω · cm, and high dielectric strength of 2.0 kV/mm or more.

To the contrary, the composite sheets of the comparative examples have volume resistivity of 10¹¹ Ω · cm or less, which is not sufficient to manifest functions as a heat dissipating material, and exhibit lower thermal conductivity and relatively high Asker C hardness compared to the examples using the same silicone organic binder.

Further, as shown in the experiment results of the composite sheets of examples, it was confirmed that even if the content of core-shell type filler particles is increased in the composite sheet, the hardness does not significantly increase, but the dielectric strength largely increases. Particularly, the composite sheets of Examples 3 to 7 including the core-shell type filler particles beyond a specific content exhibit high dielectric strength of 2.0 kV/mm or more.

### Symbols

1: Core-shell type filler particles
2: Thermally conductive ceramic compound
3: Magnetic particles

## Claims

1. A composition for a composite sheet comprising core-shell type filler particles comprising magnetic particles covered with thermally conductive ceramic compound, and a curable organic binder.

2. The composition for a composite sheet according to claim 1, wherein the magnetic particles include soft magnetic metal alloy particles or ferrite magnetic particles.

3. The composition for a composite sheet according to claim 1, wherein the magnetic particles include at least one selected from the group consisting of an iron-silicon-aluminum alloy, an iron-silicon alloy, an iron-chromium-silicon alloy, an iron-chromium alloy, a nickel-iron alloy, carbonyl iron, nickel-iron ferrite, and manganese-zinc ferrite.

4. The composition for a composite sheet according to claim 1, wherein the thermally conductive ceramic compound includes at least one selected from the group consisting of alumina (Al₂O₃), boron nitride (BN), aluminum nitride (AlN), silicon carbide (SiC), magnesium oxide (MgO), zinc oxide (ZnO), and aluminum hydroxide(Al(OH)₃).

5. The composition for a composite sheet according to claim 1, wherein the curable organic binder includes at least one selected from the group consisting of a thermally curable silicone rubber compound, a one-component thermally curable silicone binder, a two-component thermally curable silicone binder, an acryl-based resin, an epoxy resin, and a urethane resin.

6. The composition for a composite sheet according to claim 1, further comprising at least one selected from the group consisting of magnetic particles and thermally conductive ceramic compound particles.

7. The composition for a composite sheet according to claim 6, comprising:
1 to 97 wt% of the core-shell type filler particles;
1 to 70 wt% of the organic binder; and
1 to 90 wt% of the magnetic particles or thermally conductive ceramic compound particles.

8. A composite sheet comprising
an organic binder cured into a sheet shape and core-shell type filler particles dispersed in the organic binder sheet,
wherein the core-shell type filler particles comprise magnetic particles covered with thermally conductive ceramic compound.

9. The composite sheet according to claim 8, wherein the composite sheet has a thickness of 0.1 to 10.0 mm.

10. The composite sheet according to claim 8, further comprising at least one selected from the group consisting of magnetic particles and thermally conductive ceramic compound particles dispersed in the organic binder sheet.

11. A method for preparing a composite sheet, comprising:
forming core-shell type filler particles comprising magnetic particles covered with thermally conductive ceramic compound;
mixing the core-shell type filler particles and organic binder; and
forming the mixture into a sheet shape.

12. The method for preparing a composite sheet according to claim 11, wherein the step of forming the core-shell type filler particles comprises:
mixing the thermally conductive ceramic compounds and the magnetic particles; and
applying shearing stress and impact force to the mixture.

13. The method for preparing a composite sheet according to claim 12, wherein the size ratio of the magnetic particles to the thermally conductive ceramic compound particles in the mixture is 5:1 to 100:1.

14. The method for preparing a composite sheet according to claim 11, wherein the step of forming the mixture into a sheet shape is conducted by a hot press method, a tape casting method, a vacuum extrusion method, a vacuum molding casting method, or a spray coating method.
